# FASCICULE DE BREVET EUROPEEN

(11) **EP 2 121 363 B1**
(45) Date de publication et mention de la délivrance du brevet: **04.08.2010**
(21) Numéro de dépôt: 08762067.0
(22) Date de dépôt: 12.02.2008
(51) Int. Cl.: B60J 7/22, B60R 5/04, B60N 2/44

(54) **DISPOSITIF DE PROTECTION DES SIEGES ARRIERE D'UN VEHICULE AUTOMOBILE DU TYPE CABRIOLET**
VORRICHTUNG ZUM SCHÜTZEN DER RÜCKSITZE EINES CABRIOLET-AUTOMOBILS
DEVICE FOR PROTECTING THE REAR SEATS OF AN AUTOMOBILE OF THE CONVERTIBLE TYPE

(30) Priorité: 14.02.2007 FR 0701075
(43) Date de publication de la demande: 25.11.2009
(73) Titulaire: Renault SAS, 92100 Boulogne Billancourt (FR)
(72) Inventeur: HOLLEVILLE, Francis, F-78470 St Remy Les Chevreuse (FR)
(86) Numéro de dépôt international: PCT/FR2008/050215
(87) Numéro de publication internationale: WO 2008/104699

(56) Documents cités:
- EP-A- 1 736 342
- EP-A1- 0 779 172
- EP-A2- 1 247 693
- DE-A1- 10 162 758
- DE-U- 1 797 558
- US-A- 1 767 447

## Description

La présente invention concerne un dispositif de protection des sièges arrière d'un véhicule automobile du type cabriolet.

Les cabriolets ayant un habitacle ouvert, sans toit, les sièges sont toujours accessibles depuis l'extérieur du véhicule. Les vols des objets déposés sur les sièges, notamment arrière, de ces véhicules sont donc fréquents.

De plus, la conduite des cabriolets s'avère vite désagréable du fait des courants d'air générés lors du mouvement du véhicule. L'air s'engouffre en effet dans l'habitacle, au niveau des sièges arrière, puis revient vers les sièges avant, gênant ainsi le conducteur et son passager avant. Pour diminuer ou supprimer ces remous, il est connu d'avoir recours à un dispositif anti-remous. Les documents DE 1797558 U et US 1767447 divulguent des dispositifs de protection d'air pour des sièges arrières conventionnels, sans fonction anti-vol. Le document EP 1 612 078 décrit un dispositif anti-remous qui comporte un arceau, solidaire d'un cadre. L'arceau vient se monter transversalement dans l'habitacle du cabriolet, entre les deux parois latérales de l'habitacle, à l'arrière du dossier des sièges avant, au niveau du bord avant de l'assise des sièges arrière. Cet arceau dépasse hors de l'habitacle et permet d'éviter le retour de l'air vers la partie avant de l'habitacle. Le cadre comporte une première partie, ou partie avant, qui s'étend entre les deux montants de l'arceau, sensiblement au-dessus du bord avant de l'assise des sièges arrière, et une seconde partie, sensiblement perpendiculaire à l'arceau, recouverte d'un filet et qui coopère avec les parois latérales et la paroi arrière de l'habitacle de manière à obturer l'habitacle, au-dessus de l'assise des sièges arrière. Ce dispositif peut se démonter et se plier, lorsqu'il est nécessaire d'embarquer des passagers à l'arrière du cabriolet. Le cadre et le filet empêchent l'air de s'engouffrer dans l'habitacle et de former des remous tels que précités.

Outre sa fonction première d'empêcher les remous, le filet évite également les vols à la tire, qui ont lieu, fréquemment, par exemple, aux feux rouges ou lors de brefs arrêts, lorsque le conducteur laisse un objet sur les sièges arrière du cabriolet. Néanmoins, dans le cas du dispositif précité, le cadre venant se positionner au niveau du bord avant de l'assise des sièges arrière, il reste, entre les dossiers des sièges avant et l'assise des sièges arrière un espace suffisant pour permettre à un individu mal intentionné, de glisser, subrepticement, sa main pour dérober un objet posé sur l'assise des sièges arrière.

Le but de l'invention est de proposer un dispositif de protection des sièges arrière d'un véhicule du type cabriolet, qui assure une plus grande sécurité contre les vols à la tire.

Ce but est atteint au moyen d'un dispositif de protection des sièges arrière d'un véhicule du type cabriolet qui comporte un habitacle ouvert, délimité par un plancher, une paroi avant, une paroi arrière et deux paroi latérales, dans lequel sont disposées, transversalement, à proximité de la paroi avant, une rangée de sièges avant et, à proximité de la paroi arrière, une rangée de sièges arrière, les sièges avant et arrière comportant une assise et un dossier, le dispositif comportant, de manière connue, un élément de fermeture qui peut être disposé derrière le dossier des sièges avant et à une certaine distance de ceux-ci, pour couvrir l'assise des sièges arrière et qui comporte une première partie qui s'étend transversalement à l'habitacle. De manière caractéristique, selon l'invention, le dispositif comporte des moyens de fermeture complémentaires, liés à l'élément de fermeture et qui comportent des moyens d'accrochage, qui sont prévus pour coopérer avec un élément de fixation qui est solidaire du véhicule et situé, sur ou à l'arrière des sièges avant, dans une zone angulaire définie par un premier plan passant par l'élément de fermeture et l'extrémité supérieure du dossier des sièges avant et un second plan passant par l'élément de fermeture et le soubassement des sièges arrière, de manière à permettre une fermeture amovible de l'espace de l'habitacle situé entre l'élément de fermeture et l'élément de fixation pour empêcher l'accès à l'assise des sièges arrière depuis l'extérieur du véhicule.

L'élément de fermeture peut être constitué d'un ou deux rideaux fixés sur les parois de l'habitacle. Selon un mode de réalisation particulier, l'élément de fermeture comporte un cadre qui comprend la première partie précitée et une seconde partie qui est adaptée pour venir coopérer avec les parois latérales et arrière de l'habitacle, au-dessus des sièges arrière de manière à couvrir l'assise des sièges arrière.

Les moyens de fermeture complémentaires peuvent être liés à la première partie de l'élément de fermeture, ce qui permet de minimiser la longueur de la toile utilisée.

Les moyens de fermeture complémentaires peuvent comprendre des panneaux rigides ou au moins une toile. Cette toile est de préférence renforcée, de manière à être à l'épreuve des coups de couteau, au autre objet tranchant, qui pourraient rapidement l'endommager et permettre l'accès aux sièges arrière du véhicule.

Cette toile peut être opaque afin de dissimuler l'assise des sièges arrière et donc les objets qui peuvent y être posés.

La toile peut être montée sur un enrouleur ce qui permet d'améliorer l'esthétique du dispositif de l'invention, comme il le sera plus amplement expliqué ultérieurement.

Lorsque les sièges avant comportent un appui tête monté sur le dossier par l'intermédiaire de deux tiges, selon un premier mode de réalisation, les moyens d'accrochage comportent au moins une barre apte à être glissée entre les tiges de manière à fixer les moyens de fermeture complémentaires aux dossiers des sièges avant. Tout autre mode de fixation est également envisageable selon l'invention.

Selon un second mode de réalisation, l'assise des sièges arrière étant fixée sur le plancher du véhicule par l'intermédiaire d'un soubassement, les moyens d'accrochage comportent des crochets pouvant venir se fixer sur le soubassement de l'assise d'un des sièges arrière.

Le dispositif de l'invention peut également comporter, en outre, un arceau, solidaire de la première partie de l'élément de fermeture, qui comprend deux montants qui sont prévus pour coopérer chacun avec une paroi latérale de l'habitacle d'un véhicule de type cabriolet, pour monter l'arceau transversalement au véhicule, de manière à ce que l'arceau dépasse hors de l'habitacle.

La présente invention, ses caractéristiques et les différents avantages qu'elle procure seront mieux compris à la lecture de la description qui suit, de trois modes de réalisation, présentés à titre d'exemples non limitatifs, et qui fait référence aux dessins annexés, sur lesquels :
- la figure 1 représente une vue en perspective d'une partie d'un habitacle d'un véhicule du type cabriolet, équipé d'un dispositif de protection des sièges arrière, selon un premier mode de réalisation de l'invention ;
- la figure 2 représente une vue en coupe transversale d'une partie d'un habitacle d'un véhicule du type cabriolet, équipé d'un dispositif de protection des sièges arrière, selon un second mode de réalisation de l'invention ; et
- la figure 3 représente une vue en coupe transversale d'une partie d'un habitacle d'un véhicule du type cabriolet, équipé d'un dispositif de protection des sièges arrière, selon un troisième mode de réalisation de l'invention.

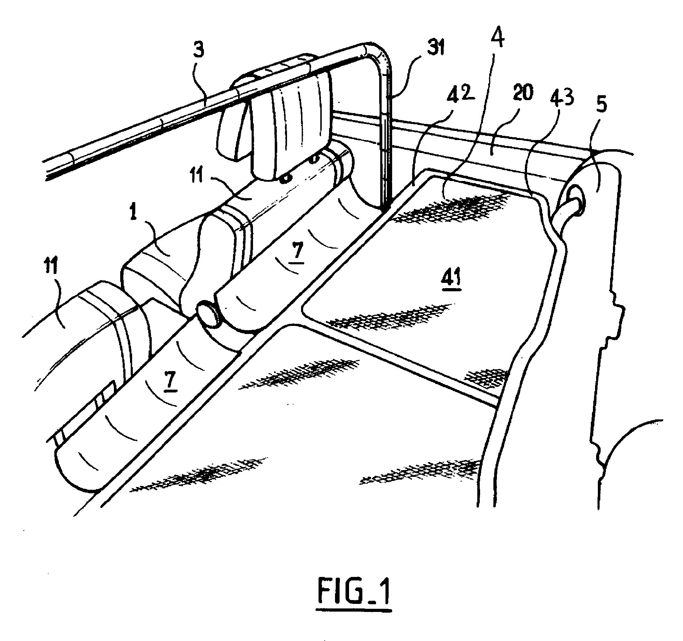

En référence à la figure 1, l'habitacle du véhicule de type cabriolet comporte deux sièges avant 1 qui comportent chacun un dossier 11. Le dispositif de protection des siège arrière, selon l'invention, fait également office de dispositif anti-remous et comporte un arceau 3 dont les montant 31 sont montés, chacun sur une paroi latérale 20 de l'habitacle. Les montants 31 s'étendent donc sensiblement parallèlement aux dossiers 11 et sont fixés sur les parois latérales 20, à l'arrière des dossiers 11 et à une certaine distance de ces derniers, sensiblement au niveau du bord avant, c'est-à-dire du bord libre, de l'assise des sièges arrière 5. L'arceau 3 est solidaire d'un cadre 4, qui comporte une première partie 42, qui s'étend derrière les deux montants 31 de l'arceau 3, au-dessus du bord avant de l'assise des siège arrière 5, et une seconde partie 43, qui coopère avec les parois latérales 20 de l'habitacle et qui est fixée au niveau des ceintures de sécurité des sièges arrière 5 du véhicule. Ce cadre 4 est sensiblement perpendiculaire à l'arceau 3 et vient s'emboîter dans l'habitacle, entre les parois latérales 20 de ce dernier de façon à le fermer à la manière d'un couvercle. Le cadre 4 comporte un élément de couverture 41, qui est, dans le cas présent, une toile, de préférence opaque, qui permet à la fois d'empêcher les remous et d'éviter à un passant de plonger sa main dans l'habitacle pour s'emparer d'un objet posé sur l'assise des sièges arrière 5. L'opacité de la toile 41 permet d'éviter toute tentation pour un éventuel voleur.

Dans le premier mode de réalisation représenté sur la figure 1, les moyens de fermeture complémentaires comportent deux toiles 7, qui sont disposées chacune à l'arrière d'un des dossiers 11 des sièges avant 1, et qui comportent, chacune, un premier bord fixé sur le cadre 4, au niveau de la première partie de ce dernier qui est solidaire des deux montants 31, et un second bord qui vient se fixer sur l'un des dossiers 11 des sièges avant 1, grâce à des moyens d'accrochage. Les toiles 7 s'étendent ainsi entre le cadre 4 et la face arrière des dossiers 11 des sièges avant 1. La longueur des toiles 7 est choisie de manière à ce que, lorsqu'elles sont fixées sur les dossiers 11, elles forment un hamac ce qui permet d'incliner ou de redresser les dossiers des sièges avant 1, sans nuire à l'efficacité du dispositif de l'invention. Le dispositif et, en particulier, les toiles 7 permettent également, de masquer la poignée de basculement (non représentée) du dossier de siège 1, empêchant ainsi un accès plus facile au sièges arrières.

Le type de fixation des toiles 7 sur les dossiers 11 n'est pas limité selon l'invention. Il peut s'agir d'élastiques venant se fixer sur le dossier 11 ou d'élastiques munis de crochets venant s'accrocher aux tiges soutenant les appuis-tête des sièges avant 1. Ces moyens d'accrochage doivent être tels qu'un voleur éventuel prendrait plusieurs minutes pour les détacher ou pour comprendre comment les détacher.

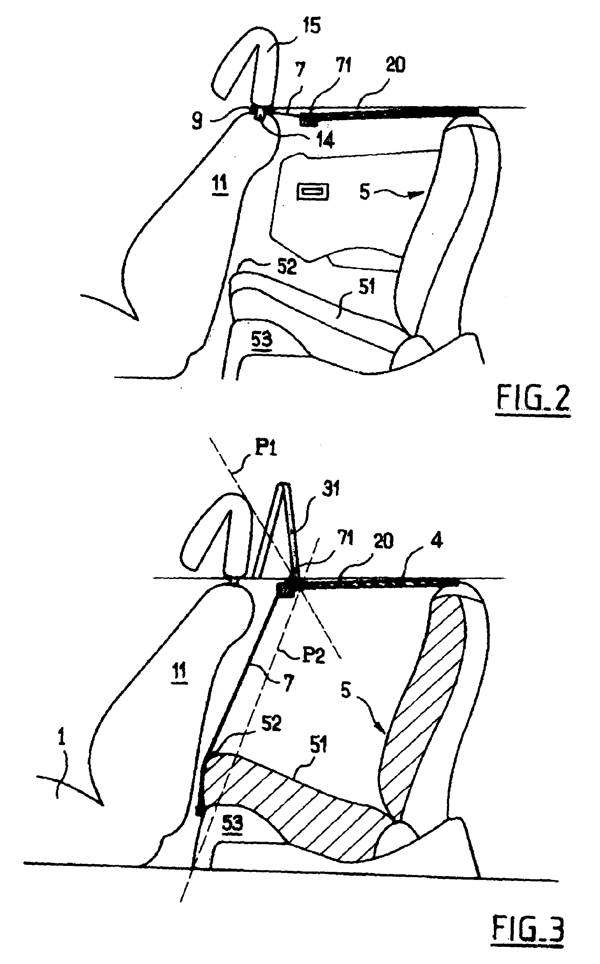

Un second et un troisième mode de réalisation vont maintenant être décrits en référence aux figures 2 et 3. Les éléments de ces modes de réalisation qui sont en commun avec le premier mode de réalisation déjà décrit, sont référencés à l'identique.

En référence à la figure 2, le cadre 4 coopère avec la partie haute des sièges arrière 5 et vient se fixer sur le bord des parois latérales 20 de l'habitacle. Le cadre 4 est ainsi rehaussé par rapport au premier mode de réalisation. Néanmoins, cette position particulière du cadre n'est pas limitative et le second mode de réalisation peut également être mis en oeuvre avec un cadre positionné plus bas, comme dans le premier mode de réalisation. Les toiles 7 sont équipées, chacune, d'un d'enrouleur 71, fixé sur le cadre 4, au niveau de la première partie de ce dernier, disposée sensiblement au-dessus du bord avant 52 de l'assise 51 des sièges arrière 5. Le bord mobile des toiles 7, qui peut être tiré hors de l'enrouleur 71, est équipé d'une barre d'accrochage 9 qui vient se coincer entre les deux tiges 14 soutenant l'appui-tête 15 du siège avant 1, par exemple, entre la bague entourant l'ouverture dans laquelle coulisse la tige 14 de l'appui-tête 15, et la mousse formant le dossier 11.

L'avantage de ce second mode de réalisation est que l'aspect esthétique est amélioré, les toiles 7 étant toujours tendues, sans empêcher les variations d'inclinaison des dossiers des sièges avant. Selon une variante non représentée, l'enrouleur est fixé sur la face arrière du dossier 11 du siège avant 1 et les moyens d'accrochage coopèrent avec le cadre 4, par exemple, la première partie de ce dernier, pour empêcher l'accès à l'assise 51 des sièges arrière 5, depuis l'extérieur du véhicule.

Sur la figure 3, les enrouleurs 71 sont toujours fixés sur le cadre 4, mais la longueur des toiles 7 est choisie pour que leur bord libre puisse atteindre le soubassement 53 des sièges arrière 5. Le bord libre des toiles 7 est ainsi muni de crochets (non représentés) qui viennent se fixer, par exemple, sur les fixations maintenant le soubassement 53 au plancher du véhicule. Dans ce troisième mode de réalisation, c'est l'espace situé entre le cadre 4 et l'assise 51 des siège arrière 5 qui est ainsi fermé. Là encore, le type de fixation du bord libre de la toile 7 au niveau du soubassement 53 du siège arrière n'est pas limité selon l'invention. Dans le cas présent, la position même des moyens d'accrochage, lorsqu'ils assurent la fixation de la toile, c'est-à-dire à l'intérieur de l'habitacle, près du plancher de ce dernier, limite tout risque de vol à la tire. En effet, un voleur serait obligé de se pencher grandement dans l'habitacle pour essayer d'atteindre les crochets ce qui requerrait un temps trop long.

Selon une variante non représentée, l'enrouleur est fixé sur le soubassement 53 des sièges arrière 5 et les moyens d'accrochage coopèrent avec le cadre 4, par exemple, la première partie de ce dernier. Dans ce cas, les moyens d'accrochage doivent être plus sophistiqués car ils sont à la portée d'un éventuel voleur.

Selon un autre mode de réalisation non représenté, le plancher du véhicule comporte, sur sa zone, située entre l'arrière des sièges avant et le soubassement des sièges arrière, un crochet ou tout autre élément de fixation, fixe par rapport au véhicule, et qui peut coopérer avec les moyens d'accrochage de la toile, éventuellement équipée d'un enrouleur et fixée sur le cadre 4, de manière à empêcher l'accès à l'assise des sièges arrière 5. L'élément de fixation peut également être disposé sur les sièges avant. Cet élément de fixation, qu'il soit rapporté ou non, se situe dans une zone angulaire définie par un premier plan P1, passant par le cadre 4 (sa première partie en l'occurrence, puisque les moyens de fermeture complémentaires sont liés à cette dernière) et l'extrémité supérieure du dossier des sièges avant 1, et un second plan P2 passant par le cadre 4 et la partie basse du soubassement 53 des sièges arrière 5 qui est en contact avec le plancher, comme représenté sur la figure 3.

## Revendications

1. Dispositif de protection des sièges arrière (5) d'un véhicule du type cabriolet qui comporte un habitacle ouvert, délimité par un plancher, une paroi avant, une paroi arrière et deux paroi latérales (20), dans lequel sont disposées, transversalement, à proximité de la paroi avant, une rangée de sièges avant (1) et, à proximité de la paroi arrière, une rangée de sièges arrière (5), lesdits sièges avant et arrière (1 ; 5) comportant une assise et un dossier (11), ledit dispositif comportant un élément de fermeture (4), qui peut être disposé derrière le dossier (11) desdits sièges avant (1) et à une certaine distance de ceux-ci, pour couvrir l'assise (51) desdits sièges arrière (5), **caractérisé en ce que** ledit dispositif comporte des moyens de fermeture complémentaires (7), liés audit élément de fermeture (4), et qui comportent des moyens d'accrochage, qui sont prévus pour coopérer avec un élément de fixation qui est solidaire du véhicule et situé sur ou à l'arrière desdits sièges avant (1), dans une zone angulaire définie par un premier plan (P1) passant par ledit élément de fermeture (4) et l'extrémité supérieure du dossier (11) des sièges avant (1) et un second plan passant (P2) par ledit élément de fermeture (4) et le soubassement (53) desdits sièges arrière (5), de manière à permettre une fermeture amovible de l'espace de l'habitacle situé entre ledit élément de fermeture (4) et ledit élément de fixation pour empêcher l'accès à l'assise (51) desdits sièges arrière (5) depuis l'extérieur du véhicule.

2. Dispositif selon la revendication 1, **caractérisé en ce que** ledit élément de fermeture comporte un cadre (4) qui comprend une première partie (42) qui s'étend transversalement à l'habitacle, et une seconde partie (43) qui est adaptée pour venir coopérer avec lesdites parois latérales (20) et arrière de l'habitacle, au-dessus desdits sièges arrière (5) de manière à couvrir l'assise (51) desdits sièges arrière (5).

3. Dispositif selon la revendication 2, **caractérisé en ce que** lesdits moyens de fermeture complémentaires (7) sont liés à ladite première partie (42).

4. Dispositif selon l'une quelconque des revendications 1 à 3, **caractérisé en ce que** lesdits moyens de fermeture complémentaires comportent au moins une toile (7).

5. Dispositif selon la revendication 4, **caractérisé en ce que** ladite toile (7) est renforcée.

6. Dispositif selon la revendication 4 ou 5, **caractérisé en ce que** ladite toile (7) est opaque.

7. Dispositif selon l'une quelconque des revendications 4 à 6, **caractérisé en ce que** ladite toile est montée sur un enrouleur (71).

8. Dispositif selon l'une quelconque des revendications 1 à 7, **caractérisé en ce que**, lesdits sièges avant (1) comportant un appui tête (15), monté sur ledit dossier (11) par l'intermédiaire de deux tiges (14), lesdits moyens d'accrochage comportent au moins une barre (9) apte à être glissée entre lesdites tiges (14) de manière à fixer lesdits moyens de fermeture complémentaires (7) aux dossiers (11) desdits sièges avant (1).

9. Dispositif selon l'une quelconque des revendications 1 à 7, **caractérisé en ce** ladite assise (51) desdits sièges arrière (5) étant fixée sur le plancher du véhicule par l'intermédiaire d'un soubassement (53), lesdits moyens d'accrochage comportent des crochets pouvant venir se fixer sur ledit soubassement (53) de l'assise (51) d'un desdits sièges arrière (5).

10. Dispositif selon l'une quelconque des revendications 2 à 9, **caractérisé en ce que** ledit dispositif comporte, en outre, un arceau (3), solidaire de ladite première partie (42), qui comprend deux montants (31) qui sont prévus pour coopérer chacun avec une paroi latérale (20) de l'habitacle d'un véhicule de type cabriolet, pour monter ledit arceau (3) transversalement audit véhicule, de manière à ce que ledit arceau (3) dépasse hors de l'habitacle.

## Claims

1. Device for protecting the rear seats (5) of a convertible-type vehicle which comprises an open passenger compartment, delimited by a floor pan, a front wall, a rear wall and two side walls (20), and in which a row of front seats (1) is arranged transversely in the region of the front wall and a row of rear seats (5) is arranged transversely in the region of the rear wall, said front and rear seats (1; 5) comprising a seat cushion and a backrest (11), said device comprising a closure element (4) which may be arranged behind the backrest (11) of said front seats (1) and at a certain distance therefrom in order to cover the seat cushion (51) of said rear seats (5), **characterized in that** said device comprises complementary closure means (7) which are connected to said closure element (4) and comprise coupling means which are provided to engage with a fixing element secured to the vehicle and located on or behind said front seats (1) in an angular region defined by a first plane (P1) passing through said closure element (4) and the upper end of the backrest (11) of the front seats (1) and a second plane (P2) passing through said closure element (4) and the underframe (53) of said rear seats (5) so as to enable removable closure of the passenger compartment space located between said closure element (4) and said fixing element in order to prevent access to the seat cushion (51) of said rear seats (5) from outside the vehicle.

2. Device according to Claim 1, **characterized in that** said closure element comprises a frame (4) which includes a first part (42) that extends transversely to the passenger compartment and a second part (43) suitable for engaging with said side walls (20) and said rear wall of the passenger compartment, above said rear seats (5) so as to cover the seat cushion (51) of said rear seats (5).

3. Device according to Claim 2, **characterized in that** said complementary closure means (7) are connected to said first part (42).

4. Device according to any one of Claims 1 to 3, **characterized in that** said complementary closure means comprise at least one fabric (7).

5. Device according to Claim 4, **characterized in that** said fabric (7) is reinforced.

6. Device according to Claim 4 or 5, **characterized in that** said fabric (7) is opaque.

7. Device according to any one of Claims 4 to 6, **characterized in that** said fabric is mounted on a winder (71).

8. Device according to any one of Claims 1 to 7, **characterized in that** said front seats (1) comprise a headrest (15) mounted on said backrest (11) by way of two rods (14), said coupling means comprising at least one bar (9) able to be slid between said rods (14) so as to fix said complementary closure means (7) to the backrests (11) of said front seats (1).

9. Device according to any one of Claims 1 to 7, **characterized in that** with said seat cushion (51) of said rear seats (5) being fixed to the floor pan of the vehicle by way of an underframe (53), said coupling means comprise hooks that are able to be fixed to said underframe (53) of the seat cushion (51) of one of said rear seats (5).

10. Device according to any one of Claims 2 to 9, **characterized in that** said device further comprises a roll bar (3) which is secured to said first part (42) and includes two uprights (31) which are provided to each engage with a side wall (20) of the passenger compartment of a convertible-type vehicle, in order to mount said roll bar (3) transversely to said vehicle in such a way that said roll bar (3) protrudes out of the passenger compartment.

## Patentansprüche

1. Schutzvorrichtung für die Rücksitze (5) eines Fahrzeugs des Typs Cabriolet, das eine offene Fahrgastzelle aufweist, die durch einen Fahrzeugboden, eine Vorderwand, eine Rückwand und zwei Seitenwände (20) begrenzt ist und in der in Querrichtung in der Nähe der Vorderwand eine vordere Sitzreihe (1) und in der Nähe der Rückwand eine hintere Sitzreihe (5) angeordnet sind, wobei die Vorder- und die Rücksitze (1; 5) jeweils eine Sitzfläche und eine Rückenlehne (11) aufweisen, wobei die Vorrichtung ein Abschließelement (4) aufweist, das hinter der Rückenlehne (11) der Vordersitze (1) und in einem bestimmten Abstand hiervon angeordnet werden kann, um die Sitzfläche (51) der hinteren Sitze (5) abzudecken, **dadurch gekennzeichnet, dass** die Vorrichtung komplementäre Abschließmittel (7) aufweist, die mit dem Abschließelement (4) verbunden sind und Einhakmittel aufweisen, die dazu vorgesehen sind, mit einem Befestigungselement zusammenzuwirken, das mit dem Fahrzeug fest verbunden ist und sich auf oder hinter den Vordersitzen (1) in einer Winkelzone befindet, die durch eine erste Ebene (P1), die durch das Abschließelement (4) und das obere Ende der Rückenlehne (11) der Vordersitze (1) verläuft, und durch eine zweite Ebene (P2), die durch das Abschließelement (4) und die Unterseite (53) der Rücksitze (5) verläuft, definiert ist, derart, dass eine lösbare Abschließung des Raums der Fahrgastzelle, der sich zwischen dem Abschließelement (4) und dem Befestigungselement befindet, ermöglicht wird, um den Zugriff auf die Sitzfläche (51) der Rücksitze (5) von außerhalb des Fahrzeugs zu verhindern.

2. Vorrichtung nach Anspruch 1, **dadurch gekennzeichnet, dass** das Abschließelement einen Rahmen (4) aufweist, der einen ersten Teil (42), der quer zur Fahrgastzelle verläuft, und einen zweiten Teil (43), der dazu ausgelegt ist, mit den Seitenwänden (20) und der Rückwand der Fahrgastzelle oberhalb der Rücksitze (5) zusammenzuwirken, enthält, derart, dass die Sitzfläche (51) der Rücksitze (5) abgedeckt ist.

3. Vorrichtung nach Anspruch 2, **dadurch gekennzeichnet, dass** die komplementären Abschließmittel (7) mit dem ersten Teil (42) verbunden sind.

4. Vorrichtung nach einem der Ansprüche 1 bis 3, **dadurch gekennzeichnet, dass** die komplementären Abschließmittel wenigstens einen Stoff (7) enthalten.

5. Vorrichtung nach Anspruch 4, **dadurch gekennzeichnet, dass** der Stoff (7) verstärkt ist.

6. Vorrichtung nach Anspruch 4 oder 5, **dadurch gekennzeichnet, dass** der Stoff (7) lichtundurchlässig ist.

7. Vorrichtung nach einem der Ansprüche 4 bis 6, **dadurch gekennzeichnet, dass** der Stoff auf einer Aufwickeleinrichtung (71) montiert ist.

8. Vorrichtung nach einem der Ansprüche 1 bis 7, **dadurch gekennzeichnet, dass** die Vordersitze (1) eine Kopfstütze (15) aufweisen, die an der Rückenlehne (11) über zwei Stifte (14) montiert ist, wobei die Einhakmittel wenigstens einen Stab (9) aufweisen, der zwischen den Stiften (14) in der Weise gleiten kann, dass die komplementären Abschließmittel (7) an den Rückenlehnen (11) der Vordersitze (1) befestigt werden.

9. Vorrichtung nach einem der Ansprüche 1 bis 7, **dadurch gekennzeichnet, dass** die Sitzfläche (51) der Rücksitze (5) an dem Fahrzeugboden des Fahrzeugs über eine Unterseite (53) befestigt ist, wobei die Einhakmittel Haken aufweisen, die an der Unterseite (53) der Sitzfläche (51) eines der Rücksitze (5) befestigt werden können.

10. Vorrichtung nach einem der Ansprüche 2 bis 9, **dadurch gekennzeichnet, dass** die Vorrichtung außerdem einen Bügel (3) aufweist, der mit dem ersten Teil (42) fest verbunden ist und zwei Streben (31) aufweist, die dazu vorgesehen sind, jeweils mit einer Seitenwand (20) der Fahrgastzelle eines Fahrzeugs des Typs Cabriolet zusammenzuwirken, um den Bügel (3) quer zum Fahrzeug in der Weise anzubringen, dass der Bügel (3) aus der Fahrgastzelle vorsteht.
